# EUROPEAN PATENT SPECIFICATION

(11) **EP 1 159 721 B1**
(45) Date of publication and mention of the grant of the patent: **18.12.2002**
(21) Application number: 99947785.4
(22) Date of filing: 11.10.1999
(51) Int. Cl.: G09B 13/02, G09B 1/06, G09B 3/04, G09B 19/02

(54) **A TEACHING AID**
LERNHILFE
AUXILIAIRE PEDAGOGIQUE

(30) Priority: 25.02.1999 GB 9904217; 17.06.1999 GB 9913986
(43) Date of publication of application: 05.12.2001
(73) Proprietor: Keywise Systems UK, Limited, Liverpool L33 7SS (GB)
(72) Inventor: DODD, David, Walton, Liverpool L4 1XL (GB)
(74) Representative: Lees, Kate Jane
(86) International application number: GB9903373
(87) International publication number: WO00051098

(56) References cited:
- DE-C- 4 205 937
- FR-A- 2 050 289
- US-A- 3 496 653
- US-A- 4 021 937
- US-A- 4 536 160
- US-A- 4 548 585
- US-A- 4 580 984
- US-A- 4 822 283
- US-A- 5 653 594
- PATENT ABSTRACTS OF JAPAN vol. 1996, no. 02, 29 February 1996 (1996-02-29) & JP 07 271291 A (MORIO MATAYOSHI), 20 October 1995 (1995-10-20)

## Description

The present invention relates to a teaching aid, particularly but not exclusively for assisting with the development of memory skills.

Teaching subjects which require memory skills, such as languages, mathematics and keyboard skills is normally achieved by repeated practise of the skill, such as going over a timestable again and again or repeatedly using a keyboard until the positioning of the keys is known. However, it would be desirable to provide a device in the form of a teaching aid that would assist in the memorizing of such factors and which would increase the appeal of learning such skills to the young.

Nowadays it is important to be computer literate and develop keyboard skills from an early age. To this end, computers are provided in schools but, due to their high cost, the number of computers provided is never sufficient for the number of pupils. As a result, each pupil is only able to make limited use of the computer. Similarly, individuals are disadvantaged if they do not have access to a computer at home on which to practice their skills.

Teaching aids have been provided to increase an individual's keyboard skills but most have required the use of a computer and hence, are of little benefit to those people that have minimal access to a computer. U.S. Patent No. 4,536,160 (Hatfield, John F) describes a computer keyboard educational toy consisting of a flat base unit having a plurality of surface slots extending partially through the base and second slots between the bottom of the surface slots and the bottom surface of the base to a metallic bottom plate. Keys are then represented on the top surfaces of bars having exterior shapes that fit within the surface slots and with magnetic tipped extensions that fit within the second slots. The slots and keyboard bars are uniquely shaped so that each bar can only fit into its respective slot to form a completed assembly similar to a conventional keyboard. However, this document only allows one key to fit in one particular slot and therefore the user can find the correct slot without knowing the layout of the keys.

It is an aim of the present invention to provide an apparatus for assisting in the development of memory skills.

It is a further aim of the present invention to provide an apparatus for assisting in the development of keyboard skills without the aid of a computer.

Accordingly, the present invention provides an apparatus for developing an individual's memory skills, the apparatus comprising a template of an object, the template having blank spaces corresponding to features of the object, and a plurality of playing pieces corresponding to said features of the object, whereby the individual must select and arrange a playing piece in its correct position on the template characterised in that a backboard is provided for temporarily placing behind the template, the backboard having the correct layout of features of the object displayed thereon, the features on the backboard lining up with the spaces on the template to allow the features to be visible therethrough.

Preferably, the template is comprised of a flat piece of material, such as cardboard or plastics material. Preferably, the blank spaces are in the form of holes or recesses for receiving a playing piece. The template may alternatively have a magnetic surface on to which correspondingly magnetic playing pieces may be placed. Alternatively, the template may have a wipe-clean surface whereby the playing pieces may be in the form of actual letters or symbols written onto the spaces provided on the template.

The playing pieces are preferably dimensioned to fit in the hole or recess provided in the template. The number of playing pieces provided in the apparatus may vary but preferably there are the same or more playing pieces than there are blank spaces on the template.

The provision of the backboard is particularly useful for a beginner and may be removed or reversed to provide a blank board once the individual has grasped the positioning of the individual features.

Additionally, separate playing cards may be provided which display the correct layout of the features on the object. These may be provided as an aid to assist the individual in positioning the pieces in the correct location or may be used to simply check that the pieces have been placed in the correct position.

The apparatus may be incorporated in to a game between two or more players. For example, each player may be provided with an equal number of playing pieces and take it in turns to place their chosen pieces in the correct space on the template. More than one of each type of playing piece may be provided whereby, if the space has already been filled, the player must swap his piece and miss a turn. In this manner, the winner of the game is the first player to place all his playing pieces correctly on the template. Different sets of playing pieces may be distinguished by providing pieces in particular colours.

In a preferred embodiment of the present invention, the template is in the form of a keyboard, being comprised of a flat, rectangular piece of material having blank spaces corresponding to the normal positioning of keys on the keyboard. A number of keys may be drawn in on the template to provide a boundary to the keyboard and to assist the individual in placing the correct pieces in the correct position on the template. The playing pieces are preferably in the shape of the keys of a keyboard and display a letter or symbol of a key on the upper surface thereof.

Additionally, an electronic apparatus may be provided whereby each blank space lights up when the correct key is placed in the space. This may be incorporated into a game whereby the winner of the game is the first player to light up a row of keys on the template. The players may also challenge each other to place a correct key in a specified blank space on the template. The keys are divided equally between the players and if the incorrect key is placed in the specified space, the player must take that key back plus take one of the other player's keys. Alternatively, a pack of playing cards may be provided wherein each card displays a location on the keyboard. A player randomly selects a card and must place the correct key in the location specified on the card. The winner of the game is the first player to use up all his keys.

A template of any other object may be used in the apparatus of the present invention. For example, the template may be in the form of a multiplication chart, wherein the answers to various multiplications are omitted from the template. Playing pieces are provided, each having a particular answer displayed thereon, and the user must insert the playing piece in the template to provide the correct answer to a given multiplication. Again, a backboard may be provided for inserting behind the template to enable to the user to memorize the correct answers before removing the backboard and completing the template from memory.

A further apparatus may include a template having English words displayed thereon, each word having an adjacent blank space for insertion of the corresponding word in a different language, such as French or German, the corresponding word being displayed on one of the playing pieces provided with the apparatus. A further example has a template having historical events displayed thereon, the template having holes for insertion of a playing piece displaying the correct date of the event. Again, a temporary backboard having the correct layout of dates may be provided for placing behind the template whereby the dates may be viewed through the holes of the template.

For a better understanding of the present invention and to show more clearly how it may be carried into effect, reference will now be made by way of example only, to the accompanying drawings in which:-
Figure 1 is a diagram of a keyboard template for a teaching aid according to one embodiment of the present invention;
Figure 2 is a diagram of a backboard for use in conjunction with the keyboard template shown in Figure 1;
Figure 3 is a plan view of a number of playing pieces for use with the teaching aid shown in Figures 1 and 2;
Figure 4 is a perspective view of one of the playing pieces shown in Figure 3;
Figure 5 is a diagram of two playing cards for use in conjunction with the teaching aid shown in Figures 1 to 4;
Figure 6 is a diagram of a multiplication chart template for a teaching aid according to yet a further embodiment of the present invention;
Figure 7 is a diagram of a backboard for use in conjunction with the multiplication chart template shown in Figure 6; and
Figure 8 is a plan view of a number of playing pieces for use with the teaching aid shown in Figures 6 and 7.

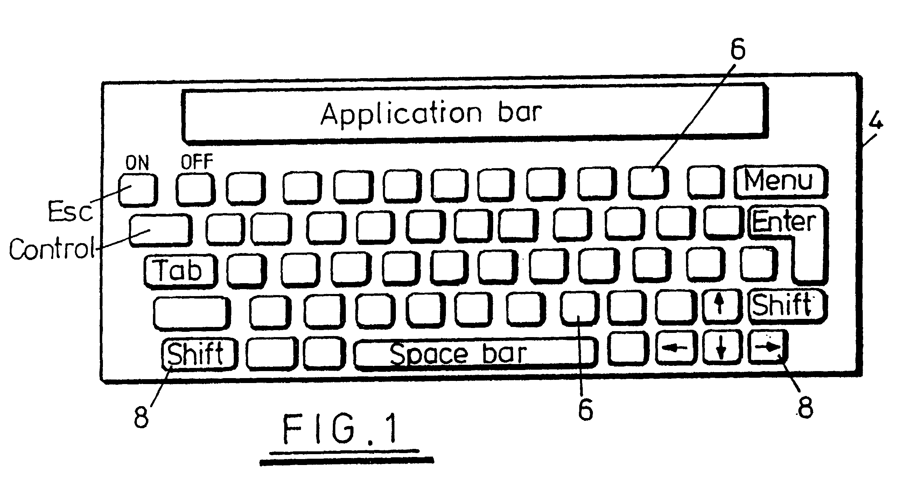

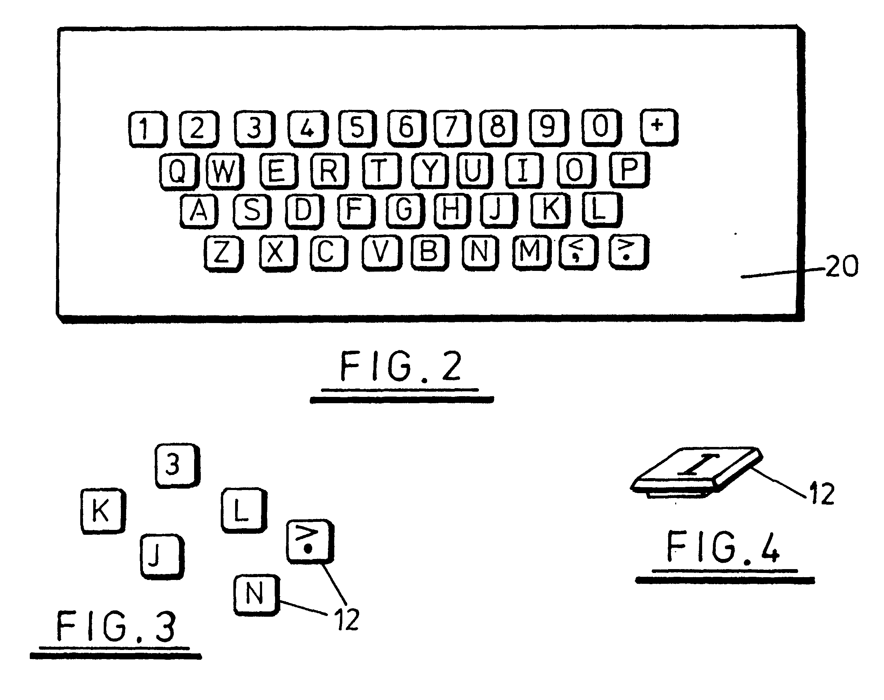

Referring to Figures 1 to 5 of the accompanying drawings, one embodiment of a teaching aid according to the present invention is illustrated. A keyboard template 4 is provided on a flat sheet, for example of cardboard or plastics material. The template has a number of keys shaded in 8, such as the "shift" and "tab" keys to illustrate the boundary of the keyboard. However, the majority of the keys are missing and a hole 6 or recess is provided in the board in the positions corresponding to the normal positioning of the keys. Playing pieces, in the form of keys 12 (see Figures 3 and 4) are provided for inserting in to the hole 6 or recess. The object of the teaching aid is to place the correct key in the correct hole, thereby increasing the user's awareness of the positioning of the keys on a keyboard.

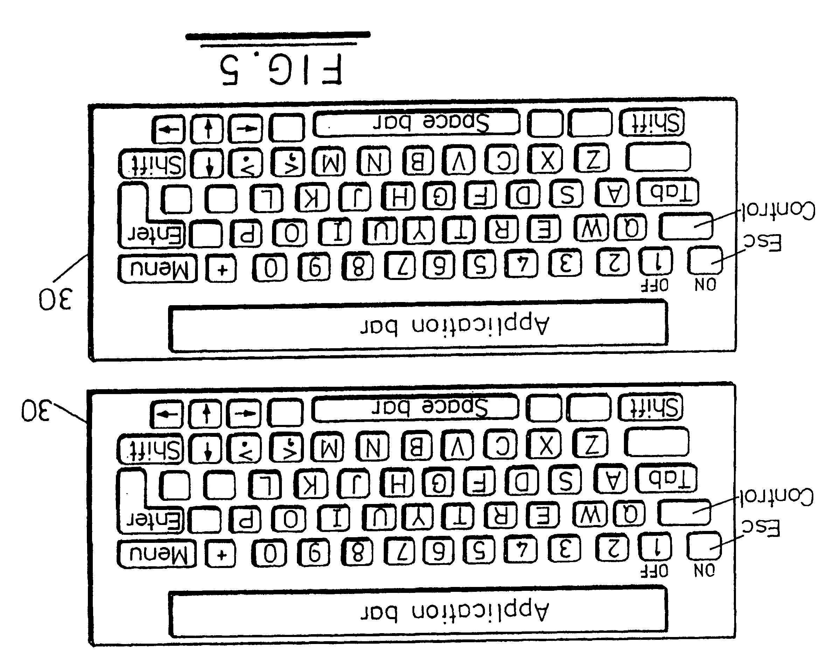

A backboard 20 (see Figure2) may be provided which has the correct layout of keys printed thereon over which the template may be placed. This will assist the beginner in learning to place the keys in the correct position. Once the user is proficient in placing the keys in the correct hole with the assistance of the printed backboard underneath the template, the backboard may be removed or replaced with a blank board and the user must endeavour to place the correct keys in the blank holes. Separate playing cards 30 (see Figure 5) having the correct layout of a keyboard printed thereon may be provided to assist in this matter.

In this manner, the beginner may familiarize himself with the layout of the keys on a computer keyboard by use of the backboard and template and then remove the backboard but refer to a separate playing card to arrange the keys correctly. Once the user is able to do this, he can endeavour to place the keys in the correct place from memory without any accompanying aids.

The teaching aid of the present invention may also be adapted to be used as a game having two or more players whereby teaching of keyboard skills is made more interesting and challenging for the individual. For example, a game may be provided having a keyboard template and blank backboard as hereinbefore described. A predetermined number of playing pieces 12, in the form of keys, is provided. For example, 84 keys may be provided, having two keys displaying the same letter or symbol normally provided on the keyboard, such as two "L" keys, two "2" keys, two ">" keys and so on. The playing pieces are laid face down on a surface and the players randomly select an equal number of pieces, with the remaining pieces being left face down on the surface. The players then take it in turns to use their skill and judgement to endeavour to place their chosen keys in the correct holes. The playing cards 30 may be consulted after the key has been inserted in a hole by a player to check that the positioning of the key is correct. If a player is incorrect he must miss a turn. As there are two keys for each hole, a player will be unlikely to place all his keys in the appropriate hole. If the hole for his key has already been filled, the player must swap the key in hand for a key left face down on the surface and miss a turn. The winner of the game is the first player to place all their keys in the correct holes on the template.

It is to be appreciated that a beginner's version of the game may be played wherein a printed backboard is provided which identifies the correct positioning of the keys.

Alternatively, each player may be provided with their own set of playing pieces, each set being of a particular colour to distinguish the pieces of each player. A further set of playing pieces may also be provided wherein the lower cases of the letters of the keyboard are printed thereon. The backboard may display both the upper and lower case or two backboards may be provided, one displaying upper case letters and the other displaying lower case letters.

The game may be further adapted to increase its complexity and appeal to the younger generation. For example, an electronic board may be provided wherein each hole lights up when the correct key is inserted in the correct hole. Each player may be allocated a certain length of time to position the key in the correct hole, for example using an egg timer. The winner of the game is, for example, the first player to light up a complete row of keys on the keyboard.

Additionally, a game may be provided for two players wherein the exact number of keys to fit into the holes on the board is provided and are divided equally between the two players. All keys are kept in view and then each player takes it in turn to challenge the other player to place the correct key in the gap specified by the other player, for example, in the gap on the bottom line, fourth from the right. If the player places the correct key in the hole, the space will be lit up. If a player places the incorrect key in the hole, he will have to take that key back plus take a second key from his Opponent. The first player to use up all their keys wins the game. Alternatively, a pack of playing cards may be provided wherein each card displays on one surface thereof a particular Location on the template, for example "bottom line, fourth from right". The players then take in turns to randomly select a card and must place the correct key in the specified location.

The template and playing pieces may also be provided in alternative forms. For example, the template may be a metallic material having the boundaries of the keys embossed thereon and the playing pieces magnetic whereby the keys may be placed in the correct position on the template. Alternatively, the template may be comprised of a wipe-clean surface wherein the individual may write the correct key onto the board and then wipe this off to allow further practice on the template.

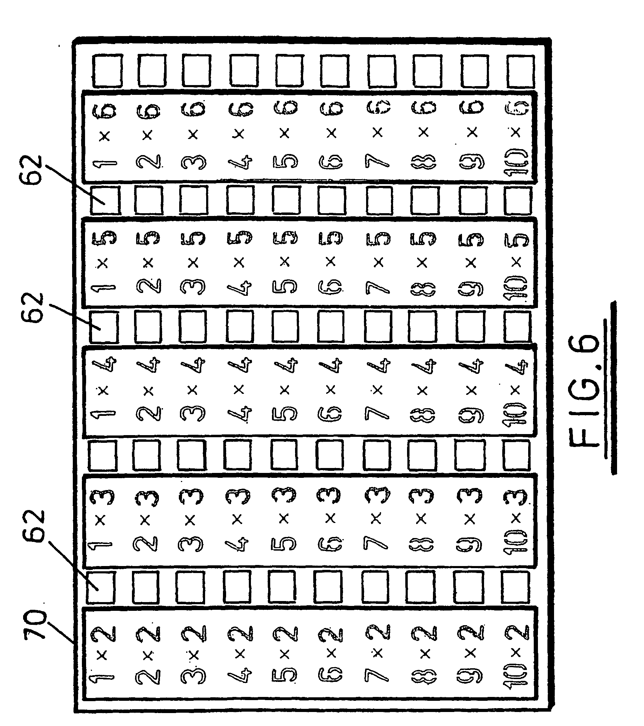

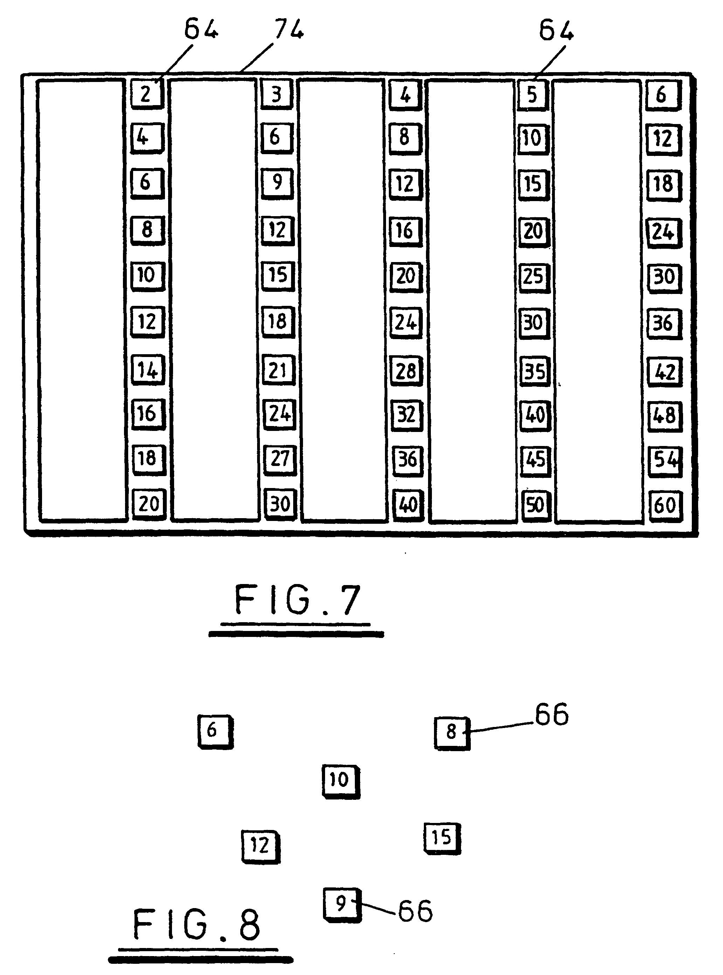

Figures 6 to 8 of the accompanying drawings illustrate a teaching aid according to a further embodiment of the present invention. The template 70 is in the form of a multiplication chart or timestable which has holes 62 or recesses for insertion of the answers. A backboard 74 (see Figure 7) is provided having the correct answers 64 printed thereon. The template may be laid over the backboard such that the answers 64 are visible through the holes 62 of the template. Playing pieces 66 (see Figure 8) are provided, each having one of the answers printed on the surface thereof. The user may insert the playing piece showing the correct answer into the correct hole with the help of the backboard and may then remove the backboard to insert the correct answers from memory.

The teaching aid of the present invention may be adapted for use with a wide range of subjects and skills. For example, the template may show words in English with gaps for insertion of the corresponding words in French, German or another language. A backboard may then be provided with the correct word in the other language and the user must place a playing piece illustrating the correct word in the hole next to the corresponding word in English, firstly with the assistance of the backboard and later, without the use of this aid. The teaching aid may also be adapted for use in relation to history. For example, matching up dates with particular events that have occurred in history. Again, two or more players may be provided with their own set of playing pieces to enable the teaching aid to be played as a game wherein the players challenge each other to place a playing piece in the correct place in the template. Playing cards displaying the correct layout may be provided to enable the positioning of the pieces in the template to be checked.

## Claims

1. An apparatus for developing an individual's memory skills, the apparatus comprising a template (4) of an object, the template having blank spaces (6) corresponding to features of the object, and a plurality of playing pieces (12) corresponding to said features of the object, whereby the individual must select and arrange a playing piece in its correct position on the template **characterised in that** a backboard (20) is provided for temporarily placing behind the template, the backboard having the correct layout of the features of the object displayed thereon, the features of the backboard lining up with the blank spaces on the template to allow the features to be visible therethough.

2. An apparatus as claimed in claim 1, wherein the blank spaces (6) are in the form of holes or recesses for receiving a playing piece.

3. An apparatus as claimed in claim 1, wherein the template has a magnetic surface for securement of magnetic playing pieces.

4. An apparatus as claimed in claim 1, wherein the template has a wipe-clean surface and the playing pieces are in the form of letters or symbols written onto the spaces provided on the template.

5. An apparatus as claimed in any one of the preceding claims, wherein separate. playing cards (30) are provided displaying the correct layout of the features on the object.

6. An apparatus as claimed in any one of claims 1 to 5, wherein each blank space and/or playing piece is illuminated when a correct playing piece is placed in a space.

7. An apparatus as claimed in any one of the preceding claims wherein the template (4) is in the form of a keyboard, having blank spaces (6) corresponding to the normal positioning of keys on the keyboard, and the playing pieces (12) are in the form of keys displaying a letter or symbol on the upper surface thereof.

8. An apparatus as claimed in any one of claims 1 to 6, wherein the template is in the form of a multiplication chart, having blank spaces (62) in the regions of the chart where the answers would be displayed, the answers (64) being individually displayed on separate playing pieces (66) of the apparatus.

9. An apparatus as claimed in any one of claims 1 to 6, wherein the template has words in one language displayed thereon and has blank spaces for the insertion of the corresponding word in a different language, the corresponding words being individually displayed on separate playing pieces of the apparatus.

10. An apparatus as claimed in any one of claims 1 to 6, wherein the template has historical events displayed thereon, having blank spaces for insertion of the correct date of the event, the correct dates being individually displayed on separate playing pieces of the apparatus.

## Patentansprüche

1. Vorrichtung zur Verbesserung der Merkfähigkeiten eines Individiums, wobei die Vorrichtung eine Schablone (4) einer Aufgabe umfasst und die Schablone Leerräume (6) besitzt, die den Kennzeichen der Aufgabe entsprechen, und eine Mehrzahl von Spielgegenständen (12), welche den Kennzeichen der Aufgabe entsprechen, wobei das Individium einen Spielgegenstand aussuchen und auf seiner richtigen Position auf der Schablone anordnen muss, **dadurch gekennzeichnet, dass** eine Rücktafel zum zeitweiligen Anordnen hinter der Schablone vorgesehen ist, wobei die Rücktafel ein korrektes Layout der Kennzeichen der Aufgaben, dargestellt auf ihr, zeigt, wobei die Kennzeichen auf der Rücktafel mit den Leerräumen auf der Schablone übereinstimmen, um zu ermöglichen, dass die Kennzeichen dort hindurch sichtbar werden.

2. Vorrichtung nach Anspruch 1, wobei die Leerräume (6) die Form von Löchern oder Ausnehmungen zur Aufnahme eines Spielgegenstandes besitzen.

3. Vorrichtung nach Anspruch 1, wobei die Schablone eine magnetische Oberfläche zum Festlegen von magnetischen Spielgegenständen aufweist.

4. Vorrichtung nach Anspruch 1, wobei die Schablone eine mit einem Lappen zu reinigende Oberfäche aufweist und die Spielgegenstände in der Form von Buchstaben oder Symbolen sind, welche auf die Räume geschrieben werden, die auf der Schablone vorgesehen sind.

5. Vorrichtung nach wenigstens einem der vorhergehenden Ansprüche, wobei separate Spielkarten (30) vorgesehen sind, welche das korrekte Layout der Kennzeichen der Aufgabe anzeigen.

6. Vorrichtung nach einem der Ansprüche 1-5, wobei jeder Leerraum und/oder Spielgegenstand erleuchtet wird, wenn ein richtiger Spielgegenstand in einem Raum platziert ist.

7. Vorrichtung nach wenigstens einem der vorhergehenden Ansprüche, wobei die Schablone (4) die Form einer Tastatur aufweist, welche Leerräume (6) besitzt, die der normalen Position von Tasten auf einer Tastatur entsprechen, und die Spielgegenstände (12) in der Form von Tasten sind, welche einen Buchstaben oder ein Symbol auf der oberen Oberfläche aufzeigen.

8. Vorrichtung nach wenigstens einem der Ansprüche 1-6, wobei die Schablone die Form einer Multiplikationstabelle besitzt, welche Leerräume (62) in den Bereichen der Tabelle besitzt, wo die Antworten angezeigt werden würden, wobei die Antworten (64) individuell auf separaten Spielgegenständen (66) der Vorrichtung dargestellt sind.

9. Vorrichtng nach wenigstens einem der Ansprüche 1-6, wobei die Schablone Wörter in einer Sprache aufweist, die auf ihr dargestellt werden, und Leerräume zum Einsetzen der korrespondierenden Worte in einer anderen Sprache aufweist, wobei die korrespondierenden Worte einzeln auf separaten Spielgegenständen der Vorrichtung dargestellt sind.

10. Vorrichtung nach wenigstens einem der Ansprüche 1-6, wobei die Schablone historische Ereignisse, die auf ihr dargestellt sind, aufzeigt, und Leerräume zum Einsetzen der korrekten Daten dieses Ereignisses besitzt, wobei die korrekten Daten einzeln auf separaten Spielgegenständen der Vorrichtung dargestellt sind.

## Revendications

1. Un appareil destiné à développer la capacité de mémoire d'un individu, cet appareil comprenant un gabarit (4) d'un objet, lequel gabarit présente des espaces vides (6) correspondant à des caractéristiques de l'objet, et une pluralité de pièces de jeu (12) correspondant aux dites caractéristiques de l'objet, l'individu devant sélectionner une pièce de jeu et l'agencer dans la bonne position du gabarit, cet appareil étant **caractérisé en ce qu'**il comporte un panneau arrière (20) destiné à être situé temporairement derrière le gabarit, lequel panneau arrière présente la disposition correcte des caractéristiques de l'objet qui y est représenté, les caractéristiques du panneau arrière correspondant aux espaces vides du gabarit pour permettre de visualiser les caractéristiques.

2. Un appareil selon la revendication 1, dans lequel les espaces vides (6) sont sous forme d'ouvertures ou d'évidements destinés à recevoir les pièces de jeu.

3. Un appareil selon la revendication 1, dans lequel le gabarit présente une surface magnétique permettant la fixation des pièces de jeu magnétiques.

4. Un appareil selon la revendication 1, dans lequel le gabarit présente une surface effaçable par essuyage et les pièces de jeu sont sous forme de lettres ou de symboles écrits dans les espaces prévus dans le gabarit.

5. Un appareil selon l'une quelconque des revendications précédentes, dans lequel sont prévues des cartes de jeu (30) individuelles, présentant la bonne disposition des caractéristiques de l'objet.

6. Un appareil selon l'une quelconque des revendications 1 à 5, dans lequel chaque espace vide et/ou chaque pièce de jeu s'allume lorsque la bonne pièce de jeu est placée dans l'espace vide convenable.

7. Un appareil selon l'une quelconque des revendications précédentes, dans lequel le gabarit (4) est sous forme d'un clavier, présentant des espaces vides (6) correspondant à la position normale des touches du clavier, et les pièces de jeu (12) sont sous forme de touches portant une lettre ou un symbole sur leur surface supérieure.

8. Un appareil selon l'une quelconque des revendications 1 à 6, dans lequel le gabarit est sous forme d'un tableau de multiplication présentant des espaces vides (62) dans les zones du tableau où seraient affichées les réponses, les réponses (64) étant mentionnées individuellement sur des pièces de jeu séparées (66) de l'appareil.

9. Un appareil selon l'une quelconque des revendications 1 à 6, dans lequel le gabarit présente des mots d'une langue portés sur le gabarit et présente des espaces vides pour l'insertion du mot correspondant d'une autre langue, les mots correspondants étant portés individuellement sur des pièces de jeu séparées de l'appareil.

10. Un appareil selon l'une quelconque des revendications 1 à 6, dans lequel sont portés sur le gabarit des évènements historiques avec des espaces vides pour l'insertion de la bonne date de l'événement, les bonnes dates étant portées individuellement sur des pièces de jeu séparées de l'appareil.
